# EUROPÄISCHE PATENTSCHRIFT

(11) **EP 3 049 965 B1**
(45) Veröffentlichungstag und Bekanntmachung des Hinweises auf die Patenterteilung: **03.06.2020**
(21) Anmeldenummer: 14771579.1
(22) Anmeldetag: 22.09.2014
(51) Int. Cl.: G06F 16/25

(54) **AUTOMATISCHE DATENHARMONISIERUNG**
AUTOMATIC DATA HARMONISATION
HARMONISATION AUTOMATIQUE DES DONNÉES

(30) Priorität: 24.09.2013 DE 102013110571
(43) Veröffentlichungstag der Anmeldung: 03.08.2016
(73) Patentinhaber: IQser IP GmbH, 22605 Hamburg (DE)
(72) Erfinder: WURZER, Jörg, 42855 Remscheid (DE)
(74) Vertreter: Weisbrodt, Bernd
(86) Internationale Anmeldenummer: PCT/EP2014/070141
(87) Internationale Veröffentlichungsnummer: WO 2015/044090

(56) Entgegenhaltungen:
- WO-A2-2004/053645
- US-A- 5 970 490
- US-A1- 2009 282 042

## Beschreibung

Die vorliegende Erfindung betrifft ein Verfahren und ein System zur automatisierten Harmonisierung von in unterschiedlichen Formaten vorliegenden Daten und Datenmodellen aus verschiedenen heterogenen Datenquellen bzw. Datenbeständen.

Die Integration heterogener Datenquellen in IT-Systeme ist bis heute sehr aufwändig, insbesondere weil die Daten aus verschiedenen verteilten Quellen unterschiedlich beschrieben sind und in unterschiedlichen Formaten sowie in verschiedenen technischen Realisierungen der Datenhaltung vorliegen.

Für die Informationsgewinnung müssen beispielsweise Kundenstammdaten schnell, einfach und einheitlich bezogen werden, d.h. aus den Daten vorhaltenden Quellen empfangen werden. Dabei ist es notwendig, die Bedeutung der Daten zu kennen, um die korrekten Daten in der sequentiell richtigen Abfolge abfragen zu können. Im Beispiel einer serviceorientierten Architektur (SOA) ist dabei die Wartung der einzelnen für eine solche Aufgabe zuständigen Services bzw. Dienste äußerst komplex und kaum durchführbar.

Weitere Problemstellungen ergeben sich im Bereich der Dateninteroperabilität bei der automatischen Verarbeitung von Daten. Unter Dateninteroperabilität wird im Sinne der vorliegenden Erfindung die Fähigkeit verschiedener, heterogener Systeme verstanden, möglichst nahtlos zusammenzuarbeiten, um Informationen auf effiziente Art und Weise auszutauschen. Dies sollte zum Beispiel beim Zusammenfassen von Stammdaten eines Kunden aus verschiedenen Quellen zu einem einzigen Geschäftsobjekt bzw. Business Object oder auch beim Transferieren von Kundenstammdaten während eines Bestellvorgangs erfolgen. Besonders problematisch ist hierbei, dass notwendige bzw. erforderliche Datenobjekte in unterschiedlichen Datenquellen vorgehalten werden und zudem unterschiedlich beschrieben sein können.

Bezüglich der Datenagilität stellt sich ferner die Anforderung, dass stabile technische Dienste auf Basis von heterogenen Datenquellen sowie heterogenen Systemen erwartet werden. Unter Datenagilität wird eine Unabhängigkeit von Schnittstellen und Modellen sowie eine schnelle Erschließung neuer Quellen verstanden. Das Problem hierbei besteht in sich kontinuierlich verändernden Daten und Datenmodellen, welche der gewünschten Homogenität der Datenquellen entgegenwirken. Ferner sind stets neue Datenquellen, welche komplette neue Schnittstellen erfordern und überdies hinaus aufgrund veränderter Anforderungen anzupassende Schnittstellen zu berücksichtigen, welche kontinuierliche Anpassungen von Services bzw. Diensten nach sich ziehen.

Auch vor dem Hintergrund der immer größer werdenden und sich immer schneller verändernden Datenmengen, oft mit dem Schlagwort "Big Data" bezeichnet, ist eine klassische Verarbeitung von Daten aufgrund der daraus resultierenden hohen Komplexität nicht mehr möglich. Besonders unter der Betrachtung erforderlicher zeitlicher Aspekte kann eine manuelle oder eine nach klassischen Methoden bzw. Lösungsansätzen durchgeführte Verarbeitung von Daten, beispielsweise ein Abgleich von Kundenstamm- oder Bestelldaten, nicht gewährleistet werden.

Konventionelle Lösungsansätze setzen entweder eine manuelle Modellierung eines Datenmodells (sogenanntes Master Data Management), eine manuelle Modellierung einer Ontologie oder eine manuelle Definition der Beziehungen (sogenanntes Mapping) zwischen verteilten Daten und den unterschiedlichen technischen Systemen voraus. Im Falle eines Datenmodells oder einer Ontologie müssen die jeweiligen Geschäftsobjekte bzw. die auf abstrakter Ebene beschriebenen Datenobjekte mit den konkreten Datenobjekten in Beziehung gesetzt werden. Dies wird in der Fachwelt als Mapping bezeichnet.

Die Druckschrift US 5,970,490 A offenbart eine Integrationsplattform für heterogene Datenbanken, bei welcher in einem ursprünglichen Datenformat vorliegende Daten in eine gemeinsame zwischenzeitliche Repräsentation transformiert und anschließend die Daten aus der zwischenzeitlichen Repräsentation in eine spezielle Repräsentationen im Zielformat transformiert werden. Bei dieser Druckschrift erfolgt die Transformation dabei mit Hilfe von Spezifikationen (Transformationsspezifikationen). Insofern wird eine klassische Mapping-Engine, als ETL-Prozess (Extract, Transform, Load) offenbart, welches der Ausgangspunkt der vorliegenden Erfindung ist.

Das Problem ist hierbei, dass das abstrakt beschriebene Datenmodell häufig nicht mit den real vorliegenden Daten übereinstimmt und ferner aufgrund unterschiedlicher technischer Realisierungen von Daten haltenden Systemen nicht oder nur unvollständig zu den real vorliegenden Daten in Beziehung gesetzt werden kann. Hierbei gehen Daten verloren oder können mangels technischer Umsetzbarkeit in erforderliche Formate nicht wie gewünscht erschlossen werden. Darüber hinaus verändern sich sowohl Datenstrukturen als auch deren technische Realisierung in IT-Systemen so schnell und häufig, dass ein Datenmodell und dessen Mapping mit realen Daten bereits nach der ersten Umsetzung veraltet ist und Fehler, beispielsweise hinsichtlich Konsistenz, Vollständigkeit, Genauigkeit und/oder Redundanz, entstehen. Schließlich scheitert der Ansatz in der Praxis aufgrund der Vielfalt und der Komplexität von Datenquellen und IT-Systemen in Organisationen und Unternehmen.

Zur technischen Lösung des Problems wird erfindungsgemäß eine automatische Harmonisierung des Datenmodells aus integrierten Daten heterogener Datenquellen vorgeschlagen. Erfindungsgemäß ist dabei vorgesehen, eine semantische Middleware zur technischen Datenintegration auf Systemebene und zur inhaltlichen Datenanalyse einzusetzen. Sobald Daten aus angeschlossenen Datenquellen mit der Middleware aktiv mittels sogenanntem Push-Prinzip) oder passiv mittels sogenanntem Pull-Prinzip) synchronisiert werden, werden diese Daten sowohl hinsichtlich ihres Formates einander angeglichen bzw. zur Interoperabilität transformiert als auch hinsichtlich ihres Inhalts semantisch analysiert und deren semantische Typisierung und Bezeichnungen für Attribute als Metadaten harmonisiert. Auf diese Weise wird das übergeordnete, abstrakte Datenmodell (sogenanntes Uniform Information Model) der integrierten Daten inkrementell, das heißt Schritt für Schritt, erweitert und harmonisiert. Vorteilhafterweise können so insbesondere Anwendungen und/oder Dienste, die das Uniform Information Model verwenden, Daten nach semantischen Kriterien aufrufen und verwenden, ohne deren ursprüngliche heterogene Beschreibung, Format und Quelle kennen zu müssen.

Weiterhin wird zur technischen Lösung des Problems eine Vorrichtung zur automatisierten Harmonisierung von in unterschiedlichen Formaten vorliegenden Daten und Datenmodellen aus verschiedenen heterogenen Datenquellen bzw. Datenbeständen vorgeschlagen, welche eine semantische Middleware zur Datenintegration und inhaltlichen Datenanalyse umfasst.

Die Ausgestaltung der Erfindung sieht bei der semantischen Analyse die Verwendung der Ähnlichkeiten von Datenobjekten vor. Verfahrensgemäß wird dabei vorteilhafterweise nach inhaltlich ähnlichen Inhaltsobjekten gesucht. Inhaltsobjekt ist im Sinne der vorliegenden Erfindung eine allgemeinere Bezeichnung für ein Datenobjekt, das auch Dokumente mit Metadaten einschließt. Wurde ein Inhaltsobjekt mit einer vorteilhafterweise vorgegebenen oder vorgebbaren Ähnlichkeit gefunden, wird dessen semantische Typisierung und die Bezeichnung der übereinstimmenden Attribute (Metadaten) übernommen. Eine semantische Typisierung im Sinne der vorliegenden Erfindung ist dabei die semantische Klassifizierung eines Inhaltsobjekts, zum Beispiel ob es sich bei dem Inhalt des Inhaltsobjekts um eine Person, um eine Nachricht, um eine Bestellung oder um eine Präsentation handelt. Attribute (Metadaten) im Sinne der vorliegenden Erfindung sind dabei Beschreibungselemente oder Metadaten eines Inhaltsobjektes, zum Beispiel der Name einer Person, der Absender einer Nachricht, die Position einer Bestellung oder der Autor eines Dokuments.

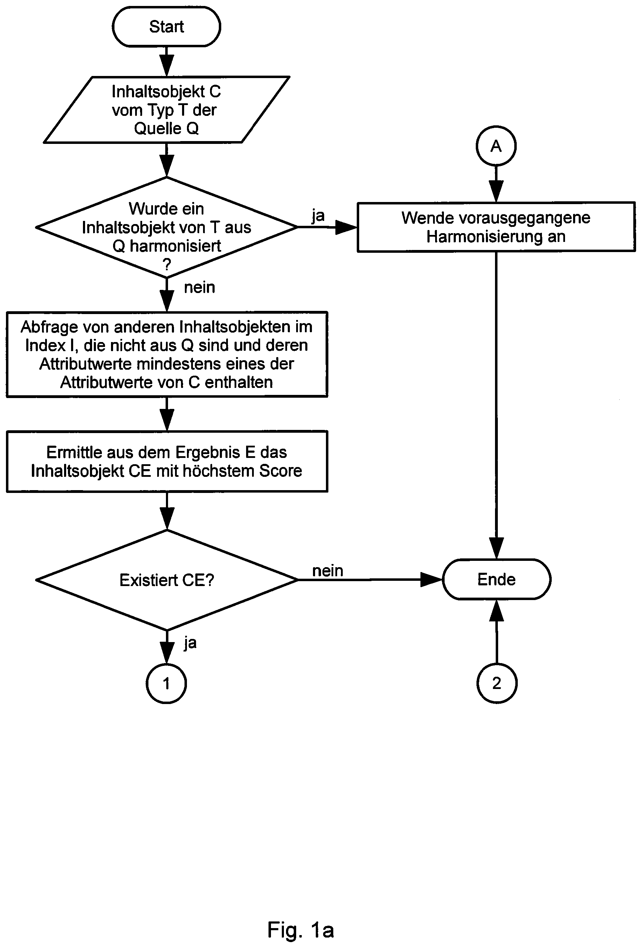

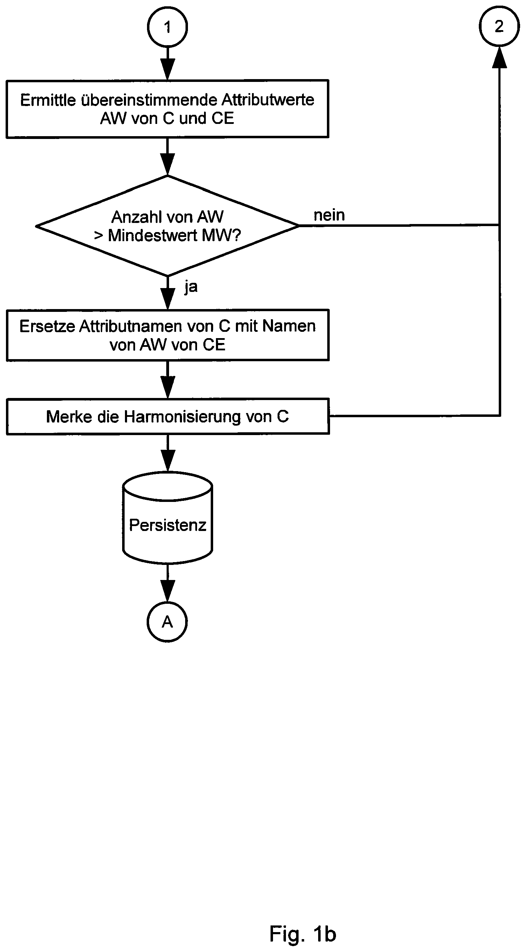

Fig. 1a und Fig. 1b zeigen anhand eines Flussdiagramms ein prinzipielles Ausführungsbeispiel für eine mögliche Umsetzung dieses Verfahrens.
Eine weitere vorteilhafte Ausgestaltung der Erfindung sieht bei der semantischen Analyse ebenfalls die Verwendung der Ähnlichkeiten von Datenobjekten vor. Verfahrensgemäß wird dabei, abweichend von dem Ausführungsbeispiel nach Fig. 1a und Fig. 1b, nicht nach inhaltlich ähnlichen einzelnen Inhaltsobjekten gesucht, sondern es wird die Ähnlichkeit der Gesamtheit von Inhalten eines bestimmten Typs einer bestimmten Datenquelle mit der Gesamtheit von Inhalten eines anderen oder gleichen Typs anderer Datenquellen verglichen. Vorteilhafterweise liegt der Fokus dabei vor allem auf übereinstimmenden Attributen der Inhaltstypen unabhängig davon, ob Sie gemeinsam in einem Inhaltsobjekt enthalten sind oder nicht. Existieren für eine Mindestanzahl von Attributen eines Inhaltsobjektes, das für die erfindungsgemäße Datenharmonisierung analysiert wird, übereinstimmende Attributwerte, werden vorteilhafterweise die jeweiligen Attributnamen der Übereinstimmungen und der jeweilige Inhaltstyp für das analysierte Inhaltsobjekt übernommen.

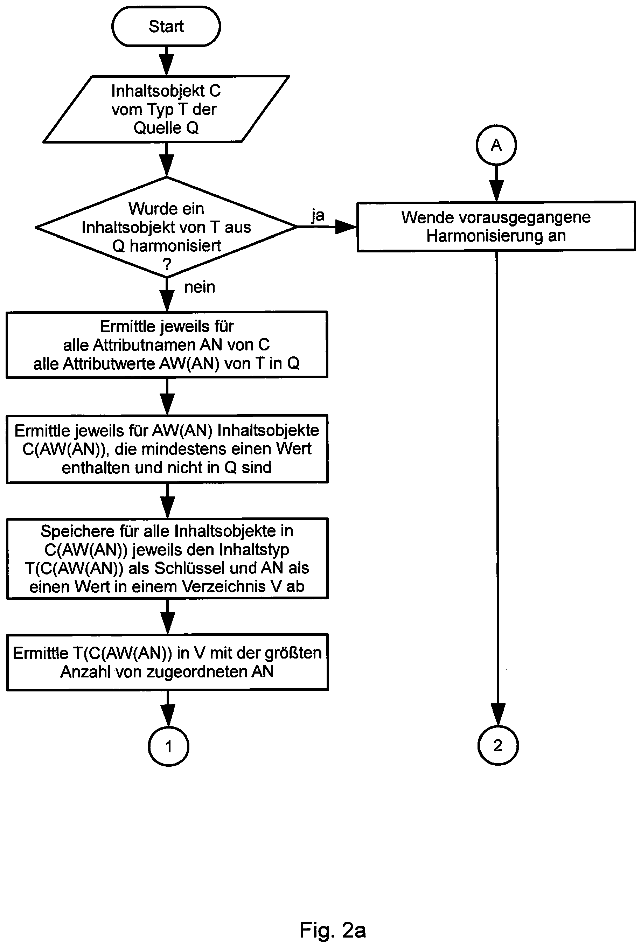

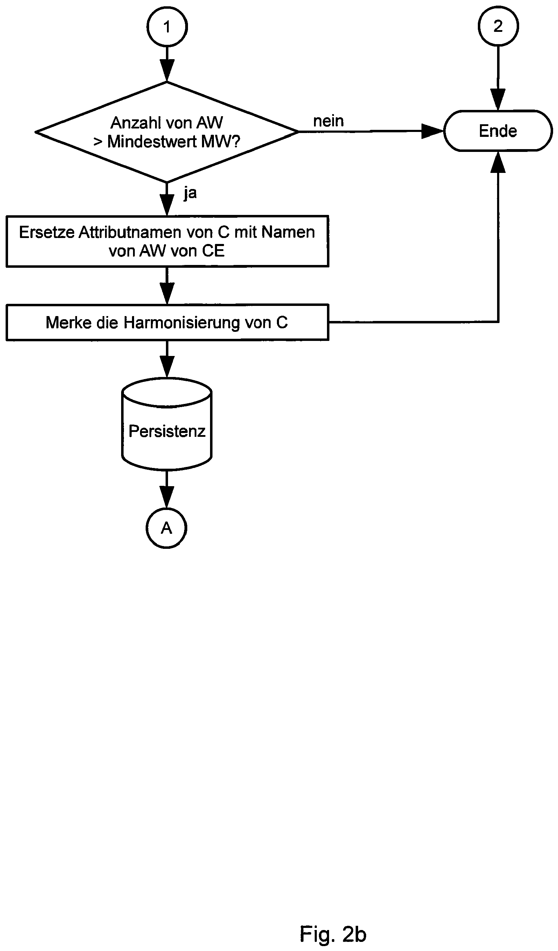

Fig. 2a und Fig. 2b zeigen anhand eines Flussdiagramms ein prinzipielles Ausführungsbeispiel für eine mögliche Umsetzung dieses Verfahrens.

In der Praxis erzielt die Lösung gemäß dem Ausführungsbeispiel nach Fig. 2a und Fig. 2b im Vergleich zu der Lösung gemäß dem Ausführungsbeispiel nach Fig. 1a und Fig. 1b zwar eine bessere Datenharmonisierung, allerdings sind die aufzuwendenden Ressourcen bei der Lösung gemäß dem Ausführungsbeispiel nach Fig. 2a und Fig. 2b aufgrund einer größeren Anzahl von zu bearbeitenden Anfragen und einer größeren Anzahl zu speichernder Ergebnisse ebenfalls größer und entsprechend kostenintensiver.

Eine weitere vorteilhafte Ausgestaltung der Erfindung sieht bei der semantischen Analyse die Verwendung von regulären Ausdrücken von Datenobjekten vor. Vorteilhafterweise werden bei dieser Verfahrensführung die Attributwerte eines zu analysierenden Inhaltsobjekts in reguläre Ausdrücke umgewandelt und mit Hilfe eines Indexes werden Inhaltsobjekte von anderen Datenquellen ermittelt, deren Attributwerte den regulären Ausdrücken entsprechen. Entspricht eine relative Mindestanzahl von Attributwerten der besten Treffer den regulären Ausdrücken des zu analysierenden Inhaltsobjektes, werden der Typ und die Attributnamen des jeweiligen Treffers für diese Entsprechungen für die erfindungsgemäße Datenharmonisierung übernommen.

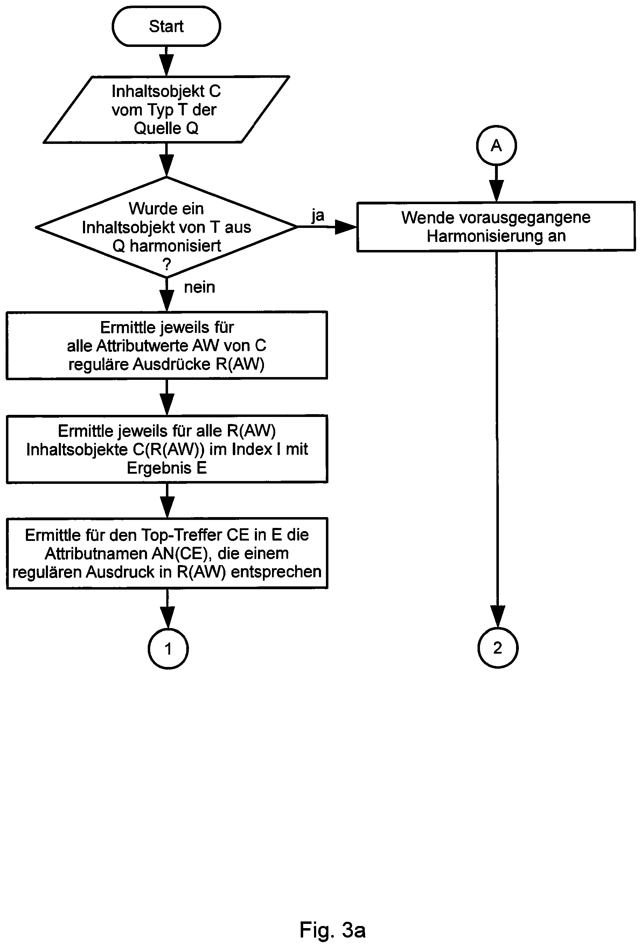

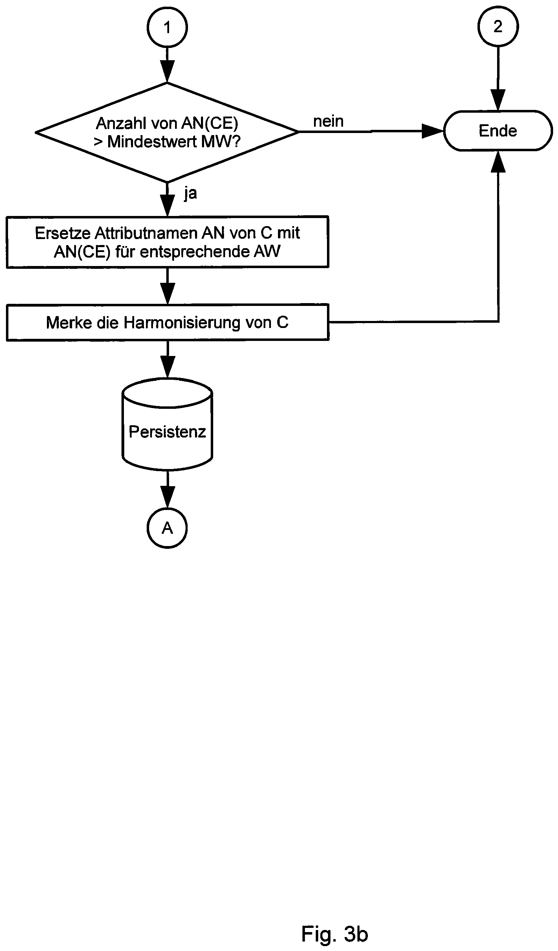

Fig. 3a und Fig. 3b zeigen anhand eines Flussdiagramms ein prinzipielles Ausführungsbeispiel für eine mögliche Umsetzung dieses Verfahrens. Vorteilhafterweise ist gemäß einer weiteren Ausgestaltung der Erfindung dabei vorgesehen, eine Validierung des besten Treffers für reguläre Ausdrücke der Attribute eines analysierten Inhaltsobjekts vorzunehmen, wobei für die Attributwerte des Treffers jeweils überprüft wird, ob es einem regulären Ausdruck für Attributwerte eines Inhaltsobjekts entspricht und ob diese Entsprechung eindeutig ist, d. h. dass ein Attributwert nur einem regulären Ausdruck entspricht. Eine weitere vorteilhafte Ausgestaltung der Erfindung sieht die Verwendung von Inhaltstypen vor. Verfahrensgemäß werden dabei die Inhaltsobjekte einer anderen Datenquelle ermittelt, die übereinstimmende Attributnamen aufweisen. Gibt es eine relative Mindestanzahl von übereinstimmenden Attributnamen wird der Inhaltstyp für das Inhaltsobjekt, das gerade analysiert wird übernommen.

Vorteilhafterweise wird diese Verfahrensweise als Auffanglösung, sogenanntes "Fall Back", eingesetzt.

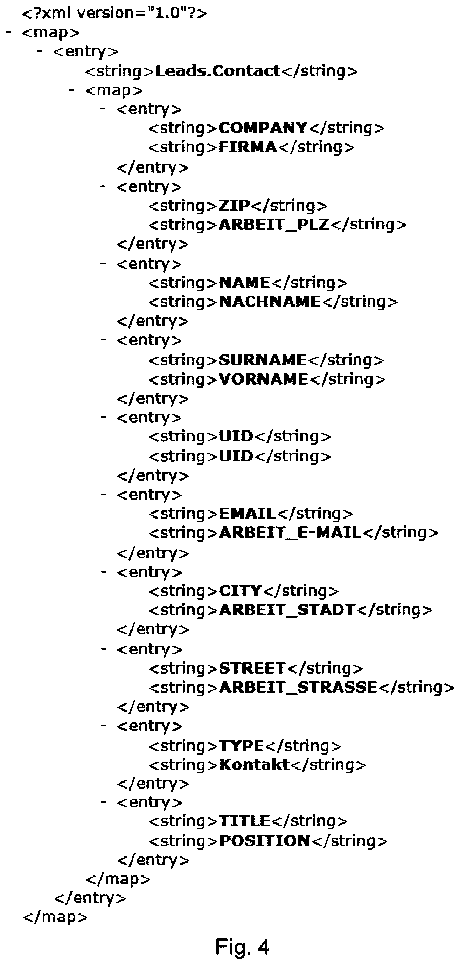

Fig. 4 zeigt ein prinzipielles Ausführungsbeispiel für ein Mapping, welches im Rahmen einer der erfindungsgemäßen Analysen produziert wird.

Gegenstand der vorliegenden Erfindung ist ferner eine als Datenverarbeitungssystem ausgebildete Vorrichtung zur automatisierten Harmonisierung von Datenmodellen aus verschiedenen heterogenen Datenquellen bzw. Datenbeständen, welches durch Einrichtungen gekennzeichnet ist, die ausgebildet und/oder eingerichtet sind, ein erfindungsgemäßes Verfahren auszuführen.

In einer bevorzugten Ausgestaltung der Vorrichtung ist diese dazu ausgebildet ist, ein erfindungsgemäßes Verfahren mittels einer Verwendung der Ähnlichkeiten von Datenobjekten auszuführen. Dies erfolgt entweder mittels Suche nach inhaltlich ähnlichen Inhaltsobjekten, mittels der Ähnlichkeit der Gesamtheit von Inhalten eines bestimmten Typs einer bestimmten Datenquelle mit der Gesamtheit von Inhalten eines anderen oder gleichen Typs anderer Datenquellen verglichen oder aber mittels Verwendung regulärer Ausdrücke von Datenobjekten, wobei die Attributwerte eines zu analysierenden Inhaltsobjekts in reguläre Ausdrücke umgewandelt und mit Hilfe eines Indexes Inhaltsobjekte von anderen Datenquellen ermittelt werden.

In einer weiteren vorteilhaften Ausgestaltung der Vorrichtung ist diese zur Synchronisierung und/oder Indizierung von Texten und/oder Werten von Metadaten von Datenobjekten ausgebildet ist, wobei die Datenobjekte nicht redundant vorgehalten werden.

Weiterhin ist die Vorrichtung bevorzugt dazu ausgebildet, Metadaten von Datenobjekten zu verwalten, wobei die Metadaten sowohl für jede Instanz einer Klasse von Datenobjekten als auch als eine aggregierte Klasse vorgehalten werden.

Vorteilhafterweise ist die als Datenverarbeitungssystem ausgebildete Vorrichtung zur Ausführung einer Metadatenanalyse zur Harmonisierung der aus den Instanzen abgeleiteten abstrakten Sicht in Form von Klassen von Datenobjekten und deren Beziehungen ausgebildet, wobei die Metadatenanalyse zur Harmonisierung sowohl inkrementell als auch in zeitlichen Intervallen als Stapelverarbeitung vorgenommen werden kann.

Die in den Figuren der Zeichnung dargestellten Ausführungsbeispiele und die im Zusammenhang mit diesen erläuterten Ausführungsbeispiele dienen lediglich der Erläuterung der Erfindung und sind für diese nicht beschränkend.

## Patentansprüche

1. System zur automatisierten Harmonisierung von in unterschiedlichen Formaten vorliegenden Daten und/oder Datenmodellen aus verschiedenen heterogenen Datenquellen bzw. Datenbeständen unter Verwendung einer semantischen Middleware zur technischen Datenintegration auf Systemebene und zur inhaltlichen Datenanalyse,
wobei Daten aus angeschlossenen Datenquellen mit der Middleware aktiv mittels Push-Prinzip oder passiv mittels Pull-Prinzip synchronisiert werden, wobei diese Daten
zunächst hinsichtlich ihres Formates einander angeglichen bzw. zur Interoperabilität transformiert werden in Inhaltsobjekte mit semantischer Typisierung und Attributen mit Attributnamen und Attributwerten,
und
anschließend diese Daten hinsichtlich ihres Inhalts semantisch analysiert werden,
wobei seitens des Systems nach inhaltlich ähnlichen Inhaltsobjekten gesucht wird und bei Auffinden von ähnlichen Inhaltsobjekten die jeweiligen Attributnamen der Übereinstimmungen und der jeweilige Inhaltstyp für das analysierte Inhaltsobjekt übernommen werden,
so dass das Uniform Information Model der integrierten Daten inkrementell, das heißt Schritt für Schritt, erweitert und harmonisiert wird.

2. System nach Anspruch 1, **dadurch gekennzeichnet, dass** die Ähnlichkeit der Gesamtheit von Inhalten eines bestimmten Typs einer bestimmten Datenquelle mit der Gesamtheit von Inhalten eines anderen oder gleichen Typs anderer Datenquellen verglichen wird und bei Existenz von übereinstimmenden Attributwerten für eine Mindestanzahl von Attributen eines analysierten Inhaltsobjektes die jeweiligen Attributnamen der Übereinstimmungen und der jeweilige Inhaltstyp für das analysierte Inhaltsobjekt übernommen werden.

3. System nach Anspruch 1 oder Anspruch 2, **gekennzeichnet durch** eine Verwendung von Inhaltstypen, wobei die Inhaltsobjekte einer anderen Datenquelle ermittelt werden, die übereinstimmende Attributnamen aufweisen und bei Vorhandensein einer relativen Mindestanzahl von übereinstimmenden Attributnamen der Inhaltstyp für das Inhaltsobjekt, das gerade analysiert wird, übernommen wird.

4. System nach einem der Ansprüche 1 bis 3, **gekennzeichnet durch** eine Verwendung von regulären Ausdrücken von Datenobjekten, wobei die Attributwerte eines zu analysierenden Inhaltsobjekts in reguläre Ausdrücke umgewandelt und mit Hilfe eines Indexes Inhaltsobjekte von anderen Datenquellen ermittelt werden, deren Attributwerte den regulären Ausdrücken entsprechen, wobei dann, wenn eine relative Mindestanzahl von Attributwerten der besten Treffer den regulären Ausdrücken des zu analysierenden Inhaltsobjektes entspricht, der Typ und die Attributnamen des jeweiligen Treffers für diese Entsprechungen für die Datenharmonisierung übernommen werden.

5. System nach Anspruch 3, **gekennzeichnet durch** eine Validierung des besten Treffers für reguläre Ausdrücke der Attribute eines analysierten Inhaltsobjekts, indem für die Attributwerte des Treffers jeweils überprüft wird, ob es einem regulären Ausdruck für Attributwerte eines Inhaltsobjekts entspricht und ob diese Entsprechung eindeutig ist, d. h. dass ein Attributwert nur einem regulären Ausdruck entspricht.

6. System nach einem der Ansprüche 1 bis 5, **dadurch gekennzeichnet, dass** dieses zur Synchronisierung und/oder Indizierung von Texten und/oder Werten von Metadaten von Datenobjekten ausgebildet ist, wobei die Datenobjekte nicht redundant vorgehalten werden.

7. System nach einem der Ansprüche 1 bis 6, **dadurch gekennzeichnet, dass** dieses dazu ausgebildet ist, Metadaten von Datenobjekten zu verwalten, wobei die Metadaten sowohl für jede Instanz einer Klasse von Datenobjekten als auch als eine aggregierte Klasse vorgehalten werden.

8. System nach einem der Ansprüche 1 bis 7, **dadurch gekennzeichnet, dass** dieses zur Ausführung einer Metadatenanalyse zur Harmonisierung der aus den Instanzen abgeleiteten abstrakten Sicht in Form von Klassen von Datenobjekten und deren Beziehungen ausgebildet ist, wobei die Metadatenanalyse zur Harmonisierung sowohl inkrementell als auch in zeitlichen Intervallen als Stapelverarbeitung vorgenommen werden kann.

## Claims

1. A system for automatic harmonization of data and/or data models which exist in different formats and which originate from different heterogeneous data sources or data pools using a semantic middleware for the technical data integration on system level and for content-related data analysis,
wherein data from connected data sources will be actively synchronized by the middleware by means of push principle or passively by means of pull principle,
wherein these data will
at first be adjusted to one another with respect to the format thereof or will be transformed for interoperability into content objects with semantic typification and attributes with attribute names and attribute values,
and
afterwards, these data will be semantically analysed with respect to the content thereof,
wherein the system will search for content objects having a similar content and if similar content objects are found, the respective attribute names of the accordances and the respective content type will be adopted for the analysed content object,
such that the uniform information model of the integrated data will be extended and harmonised in an incremental manner, i.e. step by step.

2. A system according to claim 1, **characterized in that** the similarity of the entirety of contents of a particular type of a particular data source will be compared with the entirety of contents of another or the same type of other data sources and if coincident attribute values are present for a minimum number of attributes of an analysed content object, the respective attribute names of the accordances and the respective content type will be adopted for the analysed content object.

3. A system according to claim 1 or claim 2, **characterized by** a use of content types, wherein the content objects of another data source will be determined, which content objects comprise coincident attribute names and if a relative minimum number of coincident attribute names is existent, the content type will be adopted for the content object which is just being analysed.

4. A system according to one of the claims 1 to 3, **characterized by** a use of regular expressions of data objects, wherein the attribute values of a content object to be analysed will be converted into regular expressions and by means of an index content objects of other data sources will be determined, the attribute values of which content objects correspond to the regular expressions, wherein if a relative minimum number of attribute values of the best matches corresponds to the regular expressions of the content object to be analysed, the type and the attribute names of the respective match will be adopted for these correspondences for the data harmonisation.

5. A system according to claim 3, **characterized by** a validation of the best match for regular expressions of the attributes of an analysed content object by respectively checking for the attribute values of the match, whether it corresponds to a regular expression for attribute values of a content object and whether this correspondence is unequivocal, i.e. one attribute value corresponds to only one regular expression.

6. A system according to one of the claims 1 to 5, **characterized in that** this one is configured for synchronising and/or indexing texts and/or values of metadata of data objects, wherein the data objects are not kept in a redundant manner.

7. A system according to one of the claims 1 to 6, **characterized in that** this one is configured for managing metadata of data objects, wherein the metadata are kept both for each instance of a class of data objects and as an aggregated class.

8. A system according to one of the claims 1 to 7, **characterized in that** this one is configured for carrying out a metadata analysis for harmonising the abstract view derived from the instances in the form of classes of data objects and the relations thereof, wherein the metadata analysis for the harmonisation can be carried out both in an incremental manner and in time intervals as batch processing.

## Revendications

1. Système d'harmonisation automatique de données et/ou de modèles de données, qui sont présents sous des formats différents et qui proviennent des sources de données ou des volumes de données hétérogènes différents, en utilisant un logiciel médiateur sémantique pour l'intégration de données technique au niveau du système et pour l'analyse du contenu des données,
dans lequel des donnés des sources de données connectées sont synchronisées par le logiciel médiateur activement par moyen du principe « push » ou passivement par moyen du principe « pull »,
dans lequel ces données
sont d'abord ajustées les unes aux autres par rapport à leurs formats ou sont, pour l'interopérabilité, transformées en objets de contenu avec un typage sémantique et avec des attributs avec des noms d'attribut et des valeurs d'attribut,
et
ensuite, ces données sont analysées de manière sémantique par rapport à leur contenu,
dans lequel le système cherche des objets de contenu ayant un contenu similaire et s'il trouve des objets de contenu similaires, les noms d'attribut respectifs des concordances et le type de contenu respectif seront adoptés pour l'objet de contenu analysé.
de sorte que le modèle informationnel uniforme des données intégrées sera élargi et harmonisé de manière incrémentale, c.-à-d. étape par étape.

2. Système selon la revendication 1, **caractérisé en ce que** la similarité de l'ensemble de contenus d'un type particulier d'une source de données particulière est comparée avec l'ensemble de contenus d'un autre ou du même type d'autres sources de données et s'il y a des valeurs d'attribut coïncidentes pour un nombre minimum d'attributs d'un objet de contenu analysé, les noms d'attribut respectifs des concordances et le type de contenu respectif seront adoptés pour l'objet de contenu analysé.

3. Système selon la revendication 1 ou la revendication 2, **caractérisé par** une utilisation de types de contenu, dans lequel les objets de contenu d'une autre source de données sont déterminés, lesquels comprennent des noms d'attribut coïncidents, et s'il y a un nombre minimum relatif de noms d'attribut coïncidents, le type de contenu sera adopté pour l'objet de contenu, qui est en train d'être analysé.

4. Système selon l'une des revendications 1 à 3, **caractérisé par** une utilisation d'expressions ordinaires d'objets de données, dans lequel les valeurs d'attribut d'un objet de contenu à analyser sont converties en expressions ordinaires et, à l'aide d'un indice, des objets de contenu d'autres sources de données sont déterminés, dont les valeurs d'attribut correspondent aux expressions ordinaires, et si un nombre minimum relatif de valeurs d'attribut des meilleurs coups correspond aux expressions ordinaires de l'objet de contenu à analyser, le type et les noms d'attribut du coup respectif seront adoptés pour ces correspondances pour l'harmonisation des données.

5. Système selon la revendication 3, **caractérisé par** une validation du meilleur coup pour des expressions ordinaires des attributs d'un objet de contenu analysé en respectivement vérifiant pour les valeurs d'attribut du coup s'il correspond à une expression ordinaire pour des valeurs d'attribut d'un objet de contenu et si cette correspondance est univoque, c.-à.-d. une valeur d'attribut ne correspond qu'à une expression ordinaire.

6. Système selon l'une des revendications 1 à 5, **caractérisé en ce que** celui-ci est configuré pour synchroniser et/ou indexer des textes et/ou des valeurs de métadonnées d'objets de données, les objets de données n'étant pas conservés de manière redondante.

7. Système selon l'une des revendications 1 à 6, **caractérisé en ce que** celui-ci est configuré pour gérer des métadonnées d'objets de données, dans lequel les métadonnées sont conservées pour chaque instance d'une classe d'objets de données et comme une classe agrégée.

8. Système selon l'une des revendications 1 à 7, **caractérisé en ce que** celui-ci est configuré pour exécuter une analyse de métadonnées pour l'harmonisation de la vue abstraite déduite des instances sous forme de classes d'objets de données et de leurs liaisons, dans lequel l'analyse de métadonnées pour l'harmonisation peut être effectuée de manière incrémentielle et dans des intervalles de temps comme traitement par lots.
